# EUROPEAN PATENT SPECIFICATION

(11) **EP 2 787 442 B1**
(45) Date of publication and mention of the grant of the patent: **17.01.2018**
(21) Application number: 13194403.5
(22) Date of filing: 26.11.2013
(51) Int. Cl.: G06F 11/34

(54) **Controller, information processing apparatus, and program**
Steuerung, Informationsverarbeitungsvorrichtung und Programm
Contrôleur, appareil de traitement d'informations et programme

(30) Priority: 15.02.2013 JP 2013028264
(43) Date of publication of application: 08.10.2014
(73) Proprietor: OMRON Corporation, Shiokoji-dori, Shimogyo-Ku Kyoto-shi Kyoto 600-8530 (JP)
(72) Inventor: Okamura, Kotaro, Kyoto-shi, Kyoto 600-8530 (JP); Ota, Masanori, Kyoto-shi, Kyoto 600-8530 (JP); Nishiyama, Yoshihide, Kyoto-shi, Kyoto 600-8530 (JP); Yaoita, Koji, Kyoto-shi, Kyoto 600-8530 (JP); Nakasaki, Masaru, Kyoto-shi, Kyoto 600-8530 (JP)
(74) Representative: Horn Kleimann Waitzhofer Patentanwälte PartG mbB

(56) References cited:
- WO-A1-2012/124138
- JP-A- 2002 023 812
- US-A1- 2003 225 830
- US-A1- 2005 049 999

## Description

### BACKGROUND OF THE INVENTION

### 1. TECHNICAL FIELD

The present invention relates to a control system including a controller which executes a user program periodically, and more particularly, to a control system which is connected to a database system.

### 2. RELATED ART

Machinery and equipment used in many production sites are typically controlled by a control system including, as a main component, a controller such as a programmable logic controller (hereinbelow, also called "PLC"). In such a control system, various log output functions are installed so that a failure which occurs at the time of constructing the system or during operation can be examined ex-post facto.

As prior art Documents related to the controller having such functions, Japanese Unexamined Patent Publication No. 2012-208932 discloses a PLC system including a PLC controlling operation of a device and a programmable display device connected to the PLC via a communication line. In the PLC system, the PLC includes an information storage which stores state information corresponding to the predetermined operation state in information stored in the information storage, into a predetermined storing unit, when a predetermined operation state of the device is detected.

In recent years, a control system in which a PLC is connected to a database system and data held in the PLC is stored in the database system is also known. In such a control system, when the PLC accesses the database system, there is a case that a process is required to be completed within predetermined time. For example, in the case where a control system is used in a process of production or test in a factory or the like, data which is sequentially generated has to be processed within proper time. Due to occurrence of a failure or inconvenience, there is a case that the process time as the performance of the control system becomes longer than process time assumed by a designer and the like. In this case, the designer, the administrator of the control system, and the like have to analyze the cause and take a measure. As a measure, for example, there is a case that the speed of the control process of a controller has to be increased or a case that the response performance of the database system has to be improved.

Therefore, also in the case where an inconvenience such as a delay occurs in a process of a control system including a controller and a database system, a technique for facilitating analysis of the cause of the inconvenience is needed.

JP2002023812 discloses a PLC capable of performing retrieval of data to a database. US2003225830 discloses Time stamping SQL requests and replies between a client and a remote DBMS server. WO2012124138 discloses displaying or measured PLC execution times by an information system connected to the PLC.

### SUMMARY

The invention is defined by the appended claims.

A controller according to an aspect of the present invention includes: a communication
interface configured to be connected to a database system; an instruction executing unit configured to execute a user program for controlling a control object; and an access processing unit, at the time of executing the user program including an access instruction to access the database system by the instruction executing unit, configured to control an access to the database system via the communication interface, wherein the access processing unit includes: a statement transmitting unit configured to generate a statement according to the access instruction and transmit the generated statement to the database system; and an acquiring unit configured to store into a memory information indicative of time since transmission of the generated statement to the database system until reception of a response from the database system.

Preferably, the acquiring unit starts measurement of response time by transmitting the generated statement to the database system and stores into the memory the information indicative of a result of the measurement of the response time since transmission of the statement to the database system until reception of a response from the database system.

Preferably, the acquiring unit records transmission time at which the generated statement is transmitted to the database system, records reception time at which a response from the database system to the statement is received, acquires information indicative of time until a response from the database system is received on the basis of the transmission time and the reception time, and stores the acquired information into the memory.

Preferably, in the case where a normal response is received from the database system after the statement is transmitted to the database system, the acquiring unit stores the response time into the memory.

Preferably, the instruction executing unit executes a user program including a status acquisition instruction for acquiring information indicative of time until a response from the database system is received, and the access processing unit sends the information stored in the memory to the user program in response to the status acquisition instruction.

Preferably, the controller further includes an information processing apparatus connected to the controller; and an input/output unit configured to transmit and receive data, wherein the acquiring unit acquires information indicative of time until the response is received in association with time information each time the statement is transmitted to the database system, and the input/output unit transmits to the information processing apparatus the time information and the information indicative of time until the response is received, in association with each other.

An information processing apparatus according to an aspect of the present invention is connected to a controller, wherein the controller is connected to a database system and includes: a statement transmitting unit configured to, at the time of executing a user program including an access instruction for accessing the database system, generate a statement according to the access instruction, and transmit the generated statement to the database system; and an acquiring unit configured to store into a memory time information indicative of time since the transmission of the generated statement to the database system by the statement transmitting unit until reception of a response from the database system, and the information processing apparatus includes: a reception processing unit configured to receive the time information stored in the memory by the acquiring unit from the controller; and a display processing unit configured to display the time information received by the reception processing unit on a monitor. In particular, the controller is a controller as described above.

Preferably, each time the statement is transmitted to the database system, the acquiring unit of the controller stores into the memory information indicative of time until the response is received, in association with time information, the reception processing unit of the information processing apparatus receives from the controller information indicative of time until the response associated with the time information is received, and the display processing unit displays the received time information in association with the time information.

A program according to an aspect of the present invention is configured to control operation of a controller, wherein the controller includes a communication interface configured to access a database system, a processor, and a memory, and the program causes the processor to execute: a step of executing a user program to control a control object; a step of, at the time of executing the user program including an access instruction to access the database system, generating a statement according to the access instruction and transmitting the generated statement to the database system via the communication interface; a step of storing into the memory information indicative of time since transmission of the generated statement to the database system until reception of a response from the database system; and a step of outputting the stored information to the information processing apparatus connected to the controller.

A controller according to an aspect of the present invention includes: a communication interface configured to be connected to a database system; a processor; and a memory, wherein the processor executes a user program to control a control object, at the time of executing an access instruction to access the database system that is included in the user program, generates a statement according to the access instruction, transmits the generated statement to the database system via the communication interface, and stores into the memory information indicative of time until reception of a response from the database system since the transmission. In particular, the controller is a controller as described above.

According to the present invention, debugging of a program and checking of soundness can be performed efficiently. For example, even in the case where an inconvenience such as a delay occurs in a process of a control system including a controller and a database system, analysis of the cause can be easily performed.

### BRIEF DESCRIPTION OF THE DRAWINGS

Fig. 1 is a schematic diagram illustrating the configuration of a control system according to an embodiment;
Fig. 2 is a schematic diagram illustrating a hardware configuration of a main part of a PLC according to the embodiment;
Fig. 3 is a schematic diagram illustrating a software configuration of the PLC according to the embodiment;
Fig. 4 is a schematic diagram illustrating a hardware configuration of a support device used by being connected to the PLC according to the embodiment;
Fig. 5 is a schematic diagram for explaining the outline of a log output function provided by the control system according to the embodiment;
Fig. 6 is a diagram illustrating an operation log;
Fig. 7 is a flowchart illustrating the procedure in the PLC in the embodiment and the procedure of a database device;
Fig. 8 is a diagram illustrating the procedure taken when an instruction timeout occurs and the procedure of the database device;
Fig. 9 is a flowchart illustrating the procedure of the PLC in a modification and the procedure of the database device;
Fig. 10 is a flowchart illustrating a process to obtain DB response time of the support device;
Fig. 11 is a diagram illustrating an example of a user interface in the case of displaying the operation log including DB response time in the support device; and
Fig. 12 is a diagram illustrating an example of a user interface provided in the support device in the embodiment.

### DETAILED DESCRIPTION

Embodiments of the present invention will be described in detail with reference to the drawings. The same reference numerals are designated to the same or corresponding parts in the diagram and their description will not be repeated.

### A. System Configuration

First, the configuration of a control system according to the embodiment will be described. In the embodiment, a programmable controller (PLC) controlling a control object such as machinery or equipment will be described as a typical example of a controller. The controller according to the present invention is not limited to a PLC but can be applied to various controllers.

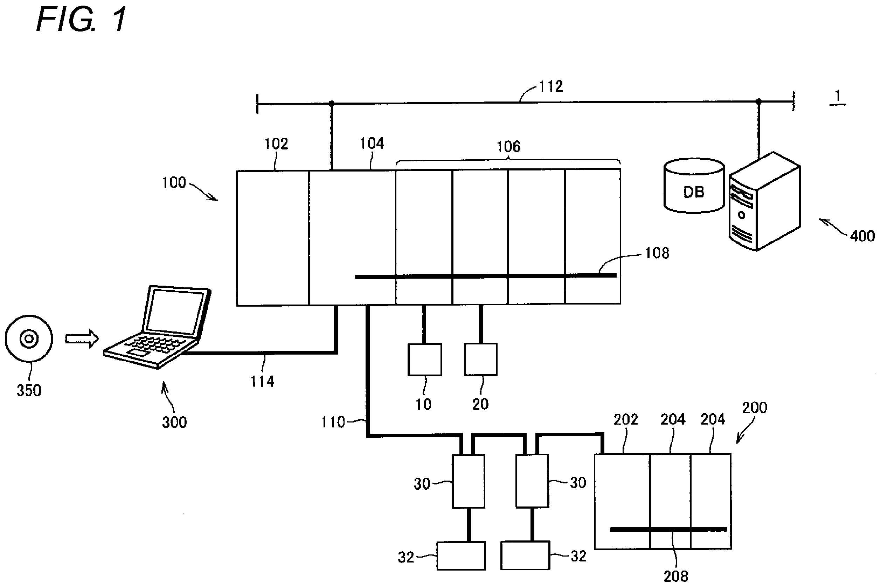

Fig. 1 is a schematic diagram illustrating the configuration of a control system 1 according to an embodiment. Referring to Fig. 1, the control system 1 includes a PLC 100, a support device 300 connected to the PLC 100, and a database device 400 receiving an access from the PLC 100. The PLC 100 executes a user program as will be described later periodically or as an event. The user program is generated by the user of the PLC 100. The user can generate, for example, a program (source program) including an access instruction by operating the support device 300. The support device 300 converts the source program to a form which can be executed in the PLC 100 and transmits the converted user program to the PLC 100. The PLC 100 executes the user program and can access the database device 400 in accordance with the access instruction included in the user program.

That is, the PLC 100 and the database device 400 are constructed so that data can be transmitted/received to/from each other via a network 112 such as the Ethernet (registered trademark).

The support device 300 is a typical example of an information processing device which can be connected to the PLC 100. The support device 300 is connected to the PLC 100 via a connection cable 114, and provides functions such as settings of various parameters, programming, monitoring, debugging, and the like to the PLC 100. The PLC 100 and the support device 300 can typically perform communication each other in accordance with the USB (Universal Serial Bus) standard.

The PLC100 includes a CPU unit 104 executing a control operation and at least one IO (Input/Output) unit 106. Those units are constructed so as to transmit/receive data each other via a PLC system bus 108. To those units, power of proper voltage is supplied by a power supply unit 102.

In the control system 1, the PLC 100 transmits/receives data to/from various field devices via the IO unit 106 (connected via the PLC system bus 108) and/or a field bus 110. The field devices include an actuator for performing some processes on a control object and a sensor for obtaining various pieces of information from a control object. In Fig. 1, as an example of such field devices, the control system 1 includes a detection switch 10, a relay 20, and a servo motor driver 30 driving a motor 32. To the PLC 100, a remote IO terminal 200 is connected via the field bus 110. The remote IO terminal 200 basically performs processes related to a general input/output process in a manner similar to the IO unit 106. More concretely, the remote IO terminal 200 includes a communication coupler 202 for performing a process related to data transmission in the field bus 110 and at least one IO unit 204. Those units are constructed so as to transmit/receive data from one another via a remote IO terminal bus 208.

### B. Configuration of PLC 100

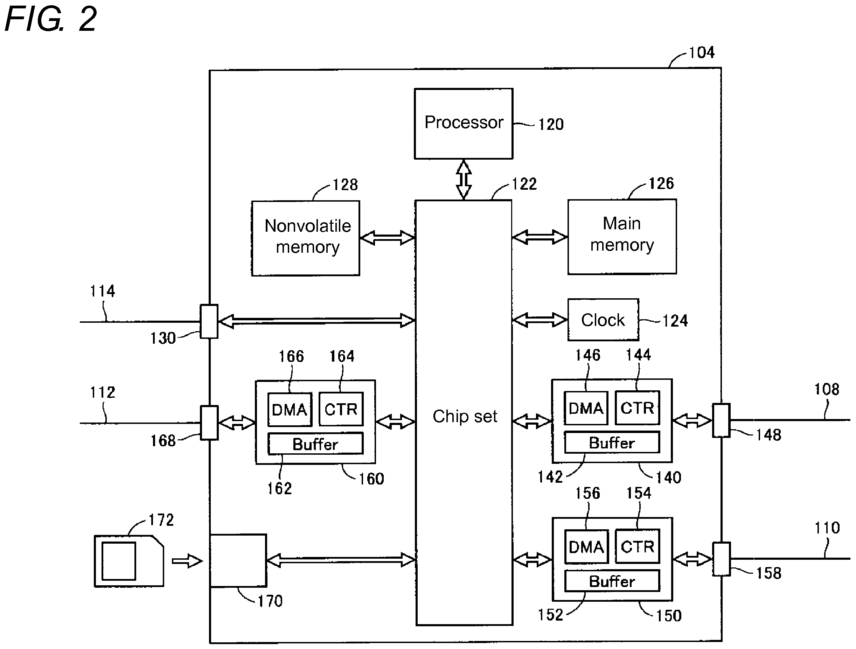

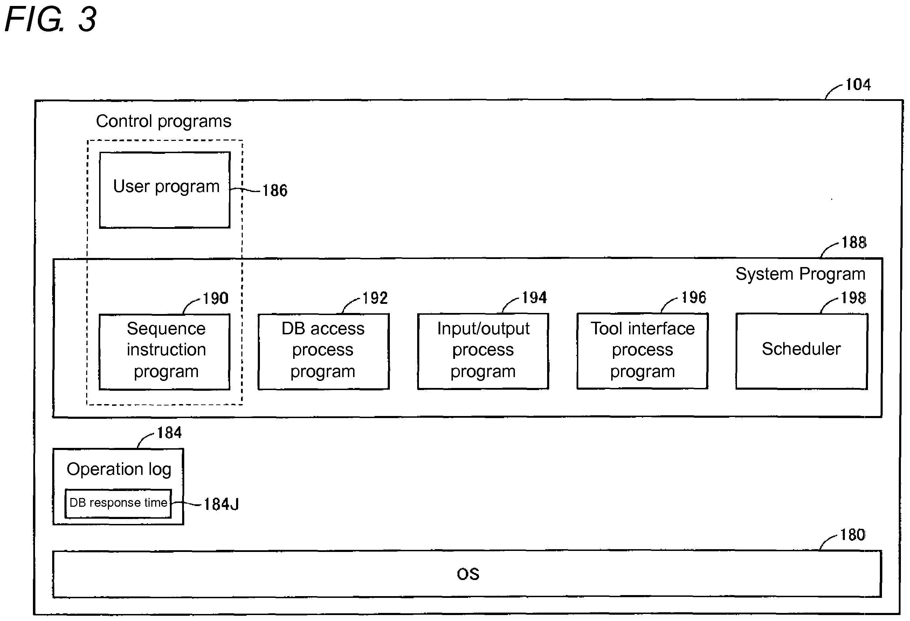

Next, the configuration of the PLC 100 according to the embodiment will be described. Fig. 2 is a schematic diagram illustrating a hardware configuration illustrating a main part of the PLC 100 according to the embodiment. Fig. 3 is a schematic diagram illustrating a software configuration of the PLC 100 according to the embodiment.

With reference to Fig. 2, the hardware configuration of the CPU unit 104 of the PLC 100 will be described. The CPU unit 104 includes a processor 120, a chip set 122, a system clock 124, a main memory 126, a nonvolatile memory 128, a USB connector 130, a PLC system bus controller 140, a field bus controller 150, a high-order communication controller 160, and a memory card interface 170. The chip set 122 and the other components are coupled to one another via various buses.

The processor 120 and the chip set 122 are constructed typically in accordance with a general computer architecture. That is, the processor 120 interprets and executes instruction codes which are sequentially supplied in accordance with internal clocks from the chip set 122. The chip set 122 transmits/receives internal data to/from the various components that are being connected and generates an instruction code necessary for the processor 120. The system clock 124 generates a system clock in a predetermined cycle and provides it to the processor 120. The chip set 122 has a function of caching data obtained as a result of execution of an arithmetic process in the processor 120 or the like.

The CPU unit 104 has, as storing means, the main memory 126 and the nonvolatile memory 128. The main memory 126 is a volatile storage region, holds various programs to be executed by the processor 120, and is also used as a work memory when the various programs are executed. The nonvolatile memory 128 holds an OS (Operating System), a system program, a user program, log information, and the like in a nonvolatile manner.

The USB connector 130 is an interface for connecting the support device 300 and the CPU unit 104. Typically, an executable program which is transferred from the support device 300 and the like is loaded in the CPU unit 104 via the USB connector 130.

The CPU unit 104 has, as communication means, the PLC system bus controller 140, the field bus controller 150, and the high-order communication controller 160. Those communication circuits transmit and receive data.

The PLC system bus controller 140 controls transmission/reception of data via the PLC system bus 108. More concretely, the PLC system bus controller 140 includes a buffer memory 142, a PLC system bus control circuit 144, and a DMA (Dynamic Memory Access) control circuit 146. The PLC system bus controller 140 is connected to the PLC system bus 108 via a PLC system bus connector 148.

The field bus controller 150 includes a buffer memory 152, a field bus control circuit 154, and a DMA control circuit 156. The field bus controller 150 is connected to the field bus 110 via a field bus connector 158. The high-order communication controller 160 includes a buffer memory 162, a high-order communication control circuit 164, and a DMA control circuit 166. The high-order communication controller 160 is connected to the network 112 via a high-order communication connector 168.

A memory card interface 170 connects the processor 120 and a memory card 172 which can be detachably connected to the CPU unit 104.

Referring now to Fig. 3, a software configuration for realizing various functions provided by the PLC 100 according to the embodiment will be described. An instruction code included in the software is read at a proper timing and executed by the processor 120 of the CPU unit 104.

In Fig. 3, software executed in the CPU unit 104 is an OS 180, a system program 188, and a user program 186.

The OS 180 provide basic execution environment for the processor 120 to execute the system program 188 and the user program 186.

The system program 188 is a software group for providing basic functions of the PLC 100. Concretely, the system program 188 includes a sequence instruction program 190, a DB (database) access process program 192, an input/output process program 194, a tool interface process program 196, and a scheduler 198.

The user program 186 is a program arbitrarily generated according to a control purpose for a control object. That is, the user program 186 is arbitrarily designed in accordance with an object to be controlled by using the control system 1.

The user program 186 realizes a control purpose of the user in cooperation with the sequence instruction program 190. That is, the user program 186 realizes a programmed operation by using an instruction, a function, a function module, or the like provided by the sequence instruction program 190. Therefore, the user program 186 and the sequence instruction program 190 will be also collectively called "control programs".

In the operation log 184, when a predetermined event occurs accompanying execution of the system program 188 and the user program 186, information of the occurred event is stored in association with time information. That is, in the operation log 184, various pieces of information accompanying execution of the system program 188 and/or the user program 186 is stored as a log (history information). DB response time 184J is a log recorded by a process which will be described later and is a log of response time when the PLC 100 performs communication with the database device 400. In the embodiment, the PLC 100 records, as the DB response time 184J, time since the PLC 100 transmits a statement to the database device 400 to the database device 400 until a response is received, into the operation log 184.

Hereinafter, each of the programs will be described more specifically.

The sequence instruction program 190 includes an instruction code group, accompanying execution of the user program 186, for calling entity of a sequence instruction designated in the user program 186 and realizing the instruction.

The DB access process program 192 includes an instruction code group for realizing a process necessary to access the database device 400, accompanying execution of the user program 186. The DB access process program 192 includes an execution code corresponding to a designable instruction in the user program 186.

The input/output process program 194 is a program for managing acquisition of input data and transmission of output data from/to the IO unit 106 and the various field devices.

The tool interface process program 196 provides an interface for transmitting/receiving data to/from the support device 300.

The scheduler 198 generates a thread and a procedure for executing a control program in accordance with a predetermined priority, the value of a system timer, and the like.

As described above, the user program 186 is generated according to a control purpose of the user. The user program 186 typically is of an object program form which can be executed by the processor 120 of the CPU unit 104. The user program 186 is generated when a source program described in a ladder form or a function block form is compiled in the support device 300. The generated user program in the object program format is transferred from the support device 300 to the CPU unit 104 and stored in the nonvolatile memory 128 or the like.

The PLC 100 has the configuration described by using Figs. 2 and 3 and functions as "an instruction executing unit for executing a user program for controlling a control object" when the processor 120 executes the system program 188 and the user program 186. The PLC 100 functions as "an access processing unit for controlling an access to the database device 400 via the communication interface at the time of execution of the user program including an access instruction to access the database device 400 by the instruction executing unit" when the processor 120 executes the DB access process program 192 and the user program 186. When the processor 120 executes the DB access process program 192 in accordance with an access instruction included in the user program 186, the PLC 100 functions as "a statement transmitting unit for generating a statement (SQL statement) according to the access instruction and transmitting the generated statement to the database device 400" and "an acquiring unit for storing, into a memory, information indicative of time since the generated statement is transmitted to the database device 400 until a response from the database device 400 is received".

### C. Configuration of Support Device 300

Next, the support device 300 according to the embodiment will be described. The support device 300 is to support use of the CPU unit 104 of the PLC 100 and provides functions of setting various parameters, programming, monitoring, debugging, and the like for the PLC 100.

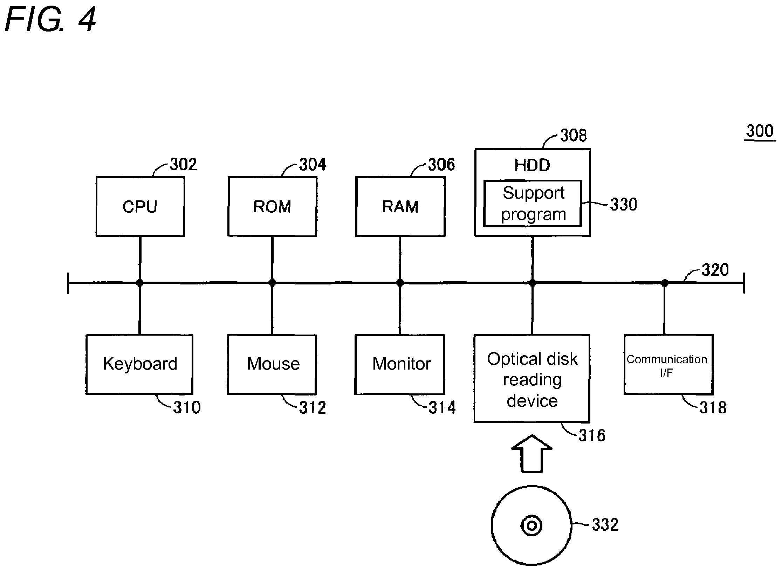

Fig. 4 is a schematic diagram illustrating a hardware configuration of the support device 300 used by being connected to the PLC 100 according to the embodiment. The support device 300 is typically constructed by a general computer.

Referring to Fig. 4, the support device 300 includes a CPU 302 executing various programs including an OS, a ROM (Read Only Memory) 304 storing BIOS and various pieces of data, a memory RAM 306 providing a work area for storing data necessary to execute a program in the CPU 302, and a hard disk (HDD) 308 storing a program or the like executed by the CPU 302 in a nonvolatile manner. More concretely, in the hard disk 308, a support program 330 for realizing the functions provided by the support device 300 is stored.

The support device 300 also includes a keyboard 310 and a mouse 312 accepting an operation from the user, and a monitor 314 for providing information to the user. Further, the support device 300 includes a communication interface (IF) 318 for communication with the PLC 100 (CPU unit 104) and the like.

The support program 330 and the like executed by the support device 300 are stored in an optical recording medium 332 and distributed. A program stored in the optical recording medium 332 is read by an optical disk reading device 316 and stored in the hard disk 308 or the like. Alternatively, a program may be downloaded from a high-order host computer or the like via a network.

When the support device 300 is connected to the PLC 100 via the communication IF 318 and the CPU 302 executes the support program 330, the support device 300 displays the function of "a reception processing unit of receiving from the PLC 100 the operation log 184 including the DB response time 184J stored in the memory of the PLC 100" and a "display processing unit of displaying the operation log 184 including the DB response time 184J received by the reception processing unit to the monitor 314".

### D. Configuration of Database Device 400

Next, the database device 400 according to the embodiment will be described. As the database device 400, a known configuration providing a database can be employed. As such a database, an arbitrary configuration of a relational data type or an object data type can be employed. Since the database device 400 is constructed according to a general computer architecture, its detailed description will not be repeated here.

The database device 400 receives a connection request or an access request (an SQL statement in a relational data type) from the PLC 100, executes a necessary process, and sends the process result or the like as a response to the PLC 100.

### E. Outline of Storage of Log of DB (Database) Response Time

Next, outline of the log output function provided by the control system 1 according to the embodiment will be described. The log output function according to the embodiment can output a log which is output accompanying execution of a predetermined process determined by a program (hereinbelow, also called "execution log") and a log which is output accompanying occurrence of a failure in execution of a program or a failure in hardware (hereinbelow, also called "event log"). The operation log 184 includes all of those logs. In the embodiment, as described above, time since the PLC 100 transmits a statement to the database device 400 until a response is received is recorded as the DB response time 184J in the operation log 184. In the embodiment, an example that the PLC 100 writes the operation log 184 to a recording medium such as a memory card loaded to the PLC 100 will be described. In a recording medium such as a memory card, the operation log 184 is stored as a log file.

The execution log is information obtained by recording a process of a predetermined kind which is executed, in association with time information. By the execution log, execution of a process designated in the user program 186 can be recognized. Basically, the execution log is always logged during operation of the PLC 100 (a state where a process of a predetermined kind is executed by a program). An event log is information of a designated process recorded in association with time information in the case such that execution of the process fails. Typically, in the case such that a designated process is interrupted due to an error or the like, the process is logged.

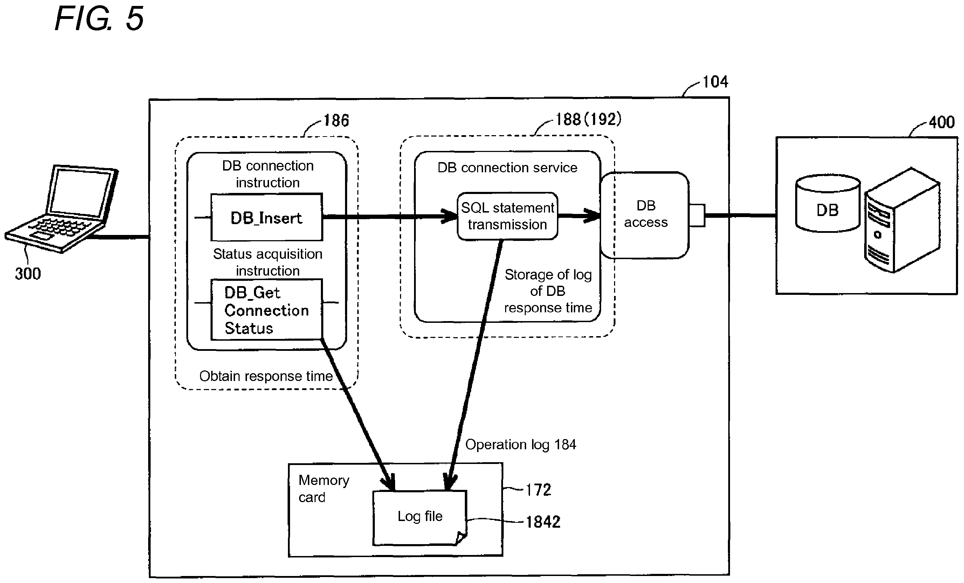

Fig. 5 is a schematic diagram for explaining the outline of a log output function provided by the control system 1 according to the embodiment. In the example of Fig. 5, the user generates a program including an instruction of connection to the database device 400 by a support program executed by the support device 300. The support device 300 converts a generated program to a format which can be executed by the PLC 100 and transmits the converted user program from the support device 300 to the PLC 100. An instruction defined by the user program 186 can be arbitrarily defined, and the kind of the defined instruction does not exert any influence on the scope of the present invention.

More concretely, it is assumed that the user operates the support device 300 to generate a program so that a DB connection instruction (DB_Insert) is included in the user program 186. The user program generated by the support device 300 is executed by the PLC 100, and at the timing of executing the DB connection instruction, a corresponding instruction code in the DB access process program 192 (Fig. 3) is called, and an SQL statement including the request of connection to the database device 400 is generated and transmitted. That is, the DB connection service realized by the DB access process program 192 included in the system program 188 is provided, and a DB connection service is triggered by issuance of the DB connection instruction in the user program 186. By the DB connection service, an SQL statement is generated and the generated SQL statement is transferred to a DB access function. The DB access function is driver software used to access various database systems. The DB access function is a function realized by the high-order communication controller 160 (Fig. 2) and the DB access process program 192 (Fig. 3), and transmits the SQL statement received from the DB connection service to the database device 400 via the network 112.

The database device 400 receives the SQL statement from the PLC 100, executes the process in accordance with the SQL statement, and as necessary, sends the result of the process as a response to the PLC 100.

In the DB connection service, in response to execution of the DB connection instruction (generation and transmission of the SQL statement), the information designated by the instruction is written in association with time information (that is, as an execution log) into the operation log 184 (in the example of Fig. 5, a log file 1842 stored in the memory card 172). That is, the log of the operation state of the PLC 100 is stored. At this time, the user does not have to explicitly instruct writing of the execution log to the operation log 184. A system environment is constructed such that when the DB connection instruction is executed, the DB connection service automatically writes the operation state to the operation log 184.

That is, the CPU unit 104 of the PLC 100 functions as writing means which, in response to occurrence of a predetermined event, by executing the DB access process program 192 (system program 188), writes information of the occurred event (execution log and/or event log) in association with time information into the memory card 172 serving as a storage. At this time, by executing the system program 188 preliminarily stored in the nonvolatile memory 128 or the like by the CPU unit 104 of the PLC 100, a predetermined event (for example, execution of the DB connection instruction) is generated. In the DB connection service, time since transmission of the statement to the database device 400 until reception of a response from the database device 400 is measured, and the measurement result is stored as DB response time into the operation log 184.

The storage to which the operation log 184 is written is not limited to the memory card 172 but may be the main memory 126, the nonvolatile memory 128 (Fig. 2), or a storing device on the outside of the PLC 100. A storing device which can hold the operation logs 184 even in the case where the power of the PLC 100 is interrupted is preferable.

In such a system environment, the user can add a log output instruction to an arbitrary position in the user program 186 and can arbitrarily delete a status acquisition instruction included in the user program 186. It is now assumed that the user generates the user program 186 including a status acquisition instruction (DB_GetConnectionStatus) as illustrated in Fig. 5 by the support device 300. The PLC 100 then executes the user program 186, the operation log 184 is referred to in accordance with the status acquisition instruction, and the user can read the DB response time 184J.

### F. Operation Log 184

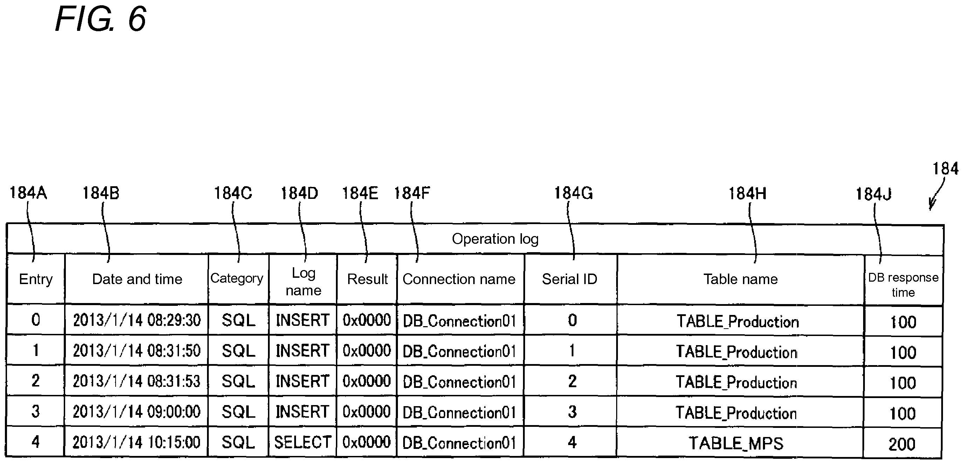

With reference to Fig. 6, the operation log 184 recorded by the PLC 100 will be described. Fig. 6 is a diagram illustrating the operation log 184. Logs recorded in the operation log 184 include an entry 184A, a date and time 184B, a category 184C, a log name 184D, a result 184E, a connection name 184F, a serial ID 184G, a table name 184H, and a DB response time 184J.

The data and time 184B indicates time at which a process as a log acquisition target occurs. The category 184C indicates the attribute of a log. The log name 184D includes information by which the log can be grasped at a glance. The result 184E includes a code indicative of a result of the process and includes, for example, information indicating whether connection to the database device 400 has succeeded or failed. The DB connection name 184F and the serial ID 184G are mainly information regarding the DB connection and includes information of a setting which is used among preset connection settings. The table name 184H includes information of identifying a database table connected by the PLC 100. The DB response time 184J indicates time required for communication between the PLC 100 and the database device 400, which is time since the PLC 100 transmits a statement to the database device 400 until a response is received as described above.

### G. Process Procedure

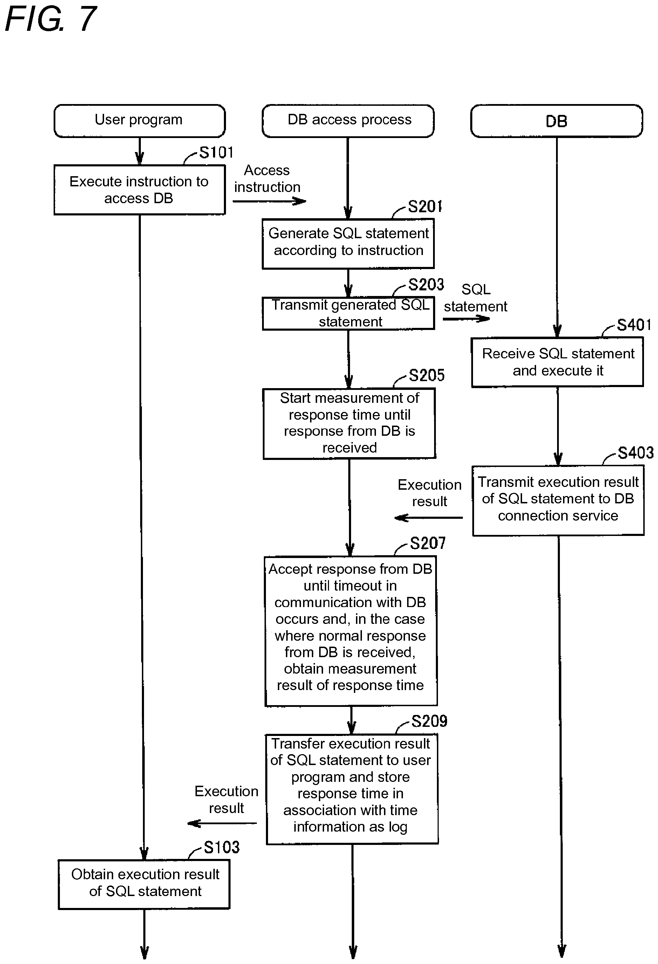

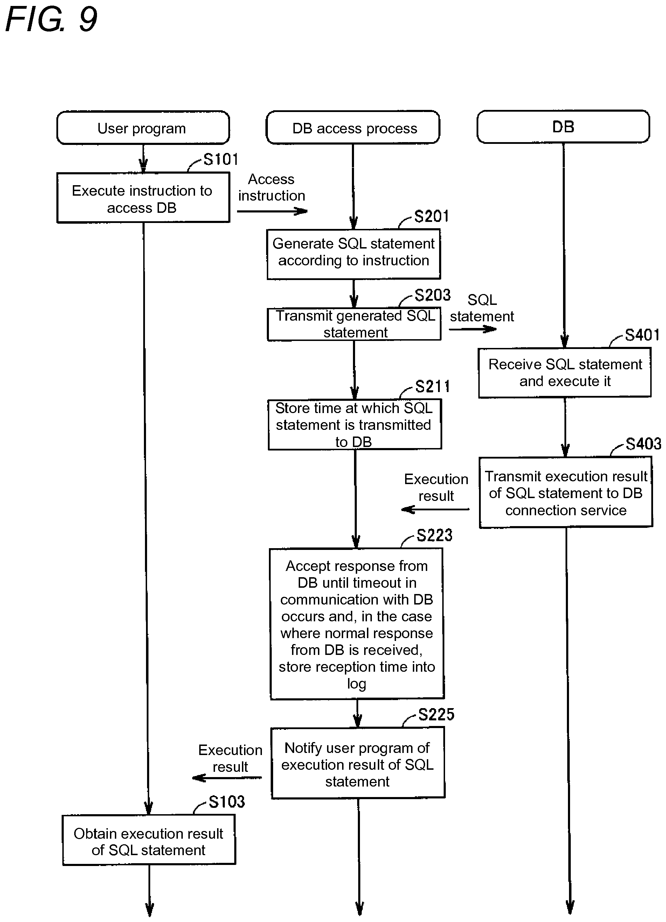

Next, a process of outputting response time at the time of communication with the database device 400 in the PLC 100 in the embodiment to a log will be described. Fig. 7 is a flowchart illustrating the procedure in the PLC 100 in the embodiment and the procedure of the database device 400. The steps shown in Fig. 7 are realized when the processor 120 in the CPU unit 104 executes the user program 186 and the system program 188. Although Fig. 9 shows an example where the user program 186 and the system program 188 are executed independently of each other, a single program including both of the programs may be executed.

Referring to Fig. 7, regarding execution of the user program 186, the processor 120 loads the user program 186 prestored and executes the loaded user program 186 repeatedly in predetermined cycles. It is assumed that the user program 186 which is to be loaded is compiled and of an object format which can be executed. A source code generated by the user may be loaded as it is, or may be complied with an intermediate code, and the intermediate code may be loaded. In this case, while compiling the loaded code, the processor 120 executes the process. That is, the processor 120 executes a designated process while calling the system program 188 as necessary in accordance with an instruction included in the user program 186.

In step S101, when the processor 120 executes a process in accordance with the instruction included in the user program 186 and executes an instruction to access the database device 400, an access to the database device 400 is executed by the DB access process program 192.

In step S201, the processor 120 executes an access to the database device 400 by the DB access process program 192, and generates a statement (SQL statement) according to the instruction for accessing the database device 400, which is included in the user program 186.

In step S203, the processor 120 transmits the generated SQL statement to the database device 400.

In step S205, the processor 120 sets timeout time of communication with the database device 400 and starts measurement of response time until a response from the database device 400 is received.

In step S401, the database device 400 receives the SQL statement transmitted from the PLC 100 and executes the received SQL statement.

In step S403, the database device 400 sends an execution result of the SQL statement as a response to the PLC 100.

In step S207, the processor 120 receives from the database device 400 a response indicative of a result of execution of the SQL statement in the database device 400 before the timeout time which is set for communication with the database device 400 elapses and obtains a result of measurement of response time required until the response from the database device 400 is received since the transmission of the SQL statement.

In step S209, the processor 120 transfers the response from the database device 400 from the DB access process program 192 to the user program 186 and stores, as the DB response time 184J, response time measured until the response from the database device 400 is received into the operation log 184.

In step S103, the processor 120 executes the user program 186 in accordance with the execution result of the SQL statement.

### Acquisition of Response Time from DB When Instruction Timeout Occurs

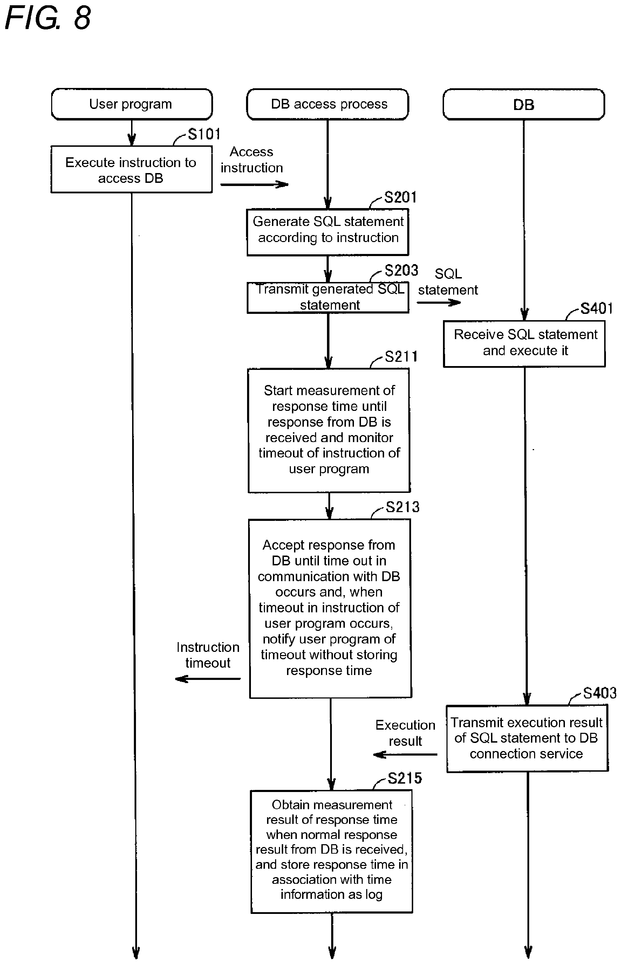

Referring now to Fig. 8, a method of storing response time in the case where timeout of an instruction occurs will be described. The processor 120 calls the DB access process program 192 by an instruction included in the user program 186 and performs a process for accessing to the database device 400. It is assumed that a timeout occurs in the instruction in the call of the DB access process program 192 (instruction timeout). Also in the case where the execution is completed because the timeout occurs in the instruction included in the user program 186 (instruction timeout), the DB connection service itself waits for a response from the database device 400. In the case where the time that the DB connection service waits for a response from the database device 400 elapses (communication timeout), the DB connection service determines that the state of connection to the database device 400 is abnormally disconnected. For example, in the case where a communication failure or the like occurs in the communication path between the PLC 100 and the database device 400, a communication timeout occurs.

In the following, a procedure taken in the case where an instruction timeout occurs, and before a communication timeout occurs, the PLC 100 receives a response indicative of a result of execution of an SQL statement from the database device 400 will be described.

Fig. 8 is a diagram illustrating the procedure of the PLC 100 and the procedure of the database device 400 when an instruction timeout occurs.

In step S101, the processor 120 executes a process in accordance with an instruction included in the user program 186, executes an instruction for accessing the database device 400, and executes an access to the database device 400 by the DB access process program 192.

In step S201, the processor 120 executes an access to the database device 400 by the DB access process program 192, and generates a statement (SQL statement) according to an instruction to access the database device 400, which is included in the user program 186.

In step S203, the processor 120 transmits the generated SQL statement to the database device 400.

In step S211, the processor 120 sets timeout time in communication with the database device 400, starts measurement of response time until a response indicative of a result of execution of the SQL statement is received from the database device 400, and monitors whether or not a timeout (instruction timeout) occurs in execution of the instruction included in the user program 186.

In step S213, the processor 120 receives a response from the database device 400 by the DB access process program 192 until the communication timeout occurs, and in the case where the instruction timeout occurs until the communication timeout occurs, without storing the response time from the DB, transfers a notification indicative of the instruction timeout from the DB access process program 192 to the user program 186.

In step S401, the database device 400 receives the SQL statement transmitted from the PLC 100 and executes the received SQL statement.

In step S403, the database device 400 sends, as a response, the execution result of the SQL statement to the PLC 100.

In step S215, the processor 120 receives a response indicative of the execution result of the SQL statement from the database device 400, obtains a result of measurement of response time required to receive the response from the database device 400 since transmission of the SQL statement, and stores the result as the DB response time 184J in association with time information into the operation log 184.

### H. Modifications

As the foregoing embodiment, the example of measuring response time required to receive a response from the database device 400 after the DB access process program 192 transmits an SQL statement to the database device 400 in order to store time until a response from the database device 400 is received as the DB response time 184J into a log has been described.

Another method of obtaining response time required to receive a response from the database device 400 is as follows. For example, transmission time at which the processor 120 transmits an SQL statement to the database device 400 and reception time at which the PLC 100 receives a response indicative of a result of execution of the SQL statement from the database device 400 are stored in a log. The PLC 100 may acquire response time from the database device 400 at the time of accessing the database device 400 from the PLC 100 by obtaining the difference between the transmission time and the reception time. The user may acquire response time from the database device 400 at the time of accessing the database device 400 from the PLC 100 by generating the user program including the instruction of referring to the transmission time and the reception time included in the log by the support device 300 and causing the PLC 100 to execute the user program.

Fig. 9 is a flowchart illustrating the procedure of the PLC 100 and the procedure of the database device 400 in the modification.

In step S101, the processor 120 executes a process in accordance with the instruction included in the user program 186, executes the instruction for accessing the database device 400, and executes an access to the database device 400 by the DB access process program 192.

In step S201, the processor 120 executes an access to the database device 400 by the DB access process program 192, and generates a statement (SQL statement) according to the instruction for accessing the database device 400, included in the user program 186.

In step S203, the processor 120 transmits the generated SQL statement to the database device 400.

In step S221, the processor 120 obtains time at which the SQL statement is transmitted and stores the fact of execution of the process of transmitting the SQL statement in association with time information into a log.

In step S401, the database device 400 receives the SQL statement transmitted from the PLC 100 and executes the received SQL statement.

In step S403, the database device 400 sends, as a response, the execution result of the SQL statement to the PLC 100.

In step S223, after transmission of the SQL statement to the database device 400, the processor 120 sets timeout time of communication. The processor 120 accepts a response from the database device 400 until the communication timeout occurs, and when a response from the database device 400 is received, obtains reception time. The processor 120 stores the fact of reception of the response result from the database device 400 in association with the time information into a log.

In step S225, the processor 120 transfers the response from the database device 400 to the user program 186 from the DB access process program 192.

In step S103, the processor 120 executes the user program 186 in accordance with the execution result of the SQL statement.

By the process, transmission time when the PLC 100 transmits the SQL statement to the database device 400 and reception time when a response is received from the database device 400 are stored in the log. Consequently, by obtaining the difference between the transmission time and the reception time, the PLC 100 can obtain the DB response time 184J.

### I. Acquisition of Response Time from Database Device 400

The operation log 184 recorded by the PLC 100 is obtained, for example, by the support device 300, and the user can refer to the operation log 184 by operating the support device 300. For example, the support device 300 obtains the operation log 184 from the PLC 100 as follows. The support device 300 performs communication with the PLC 100, reads the operation log 184 from the memory by the system program 188 of the PLC 100, and sends the read operation log 184 as a response from the PLC 100 to the support device 300.

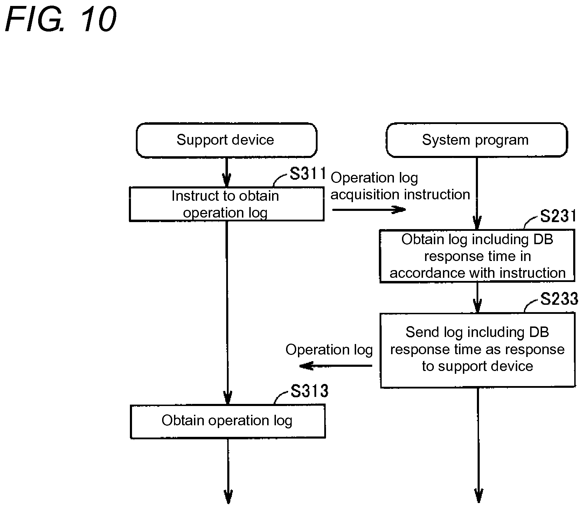

Fig. 10 is a flowchart illustrating a process to obtain the DB response time 184J of the support device 300.

In step S311, the support device 300 instructs the PLC 100 to obtain the operation log 184.

In step S231, the processor 120 reads the operation log 184 from the memory by executing the system program 188.

In step S233, the processor 120 sends the operation log 184 read from the memory as a response to the support device 300 by execution of the system program 188.

In step S313, the support device 300 receives the operation log 184 from the PLC 100 and displays the received operation log 184 on the monitor 314.

As another method, by causing a predetermined instruction to be included in the user program, the operation log 184 may be read from the memory. The user can generate the user program 186 including a status acquisition instruction (indicated as "DB_GetConnectionStatus" in the example of Fig. 5) by operating the support device 300. By the status acquisition instruction in the user program 186, the processor 120 executes a process of reading the DB response time 184J while calling the system program 188 or the DB access process program 192. By reading the operation log 184 including the DB response time 184J by execution of the user program 186, for example, after execution of an arbitrary instruction in the user program 186, the operation log 184 can be obtained, and the user can handle a cause such as a failure in the communication between the PLC 100 and the database device 400.

### J. Example of User Interface in Support Device 300

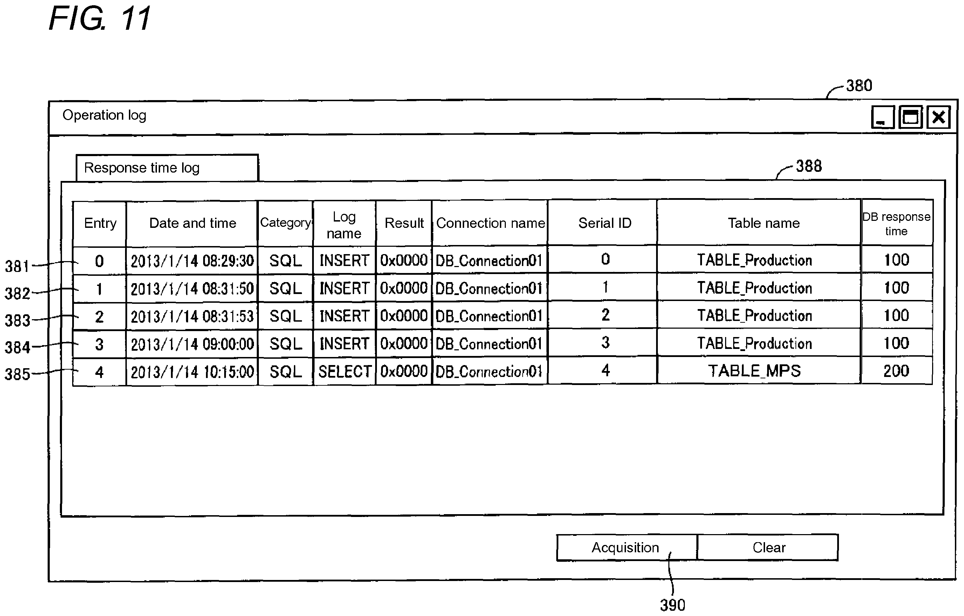

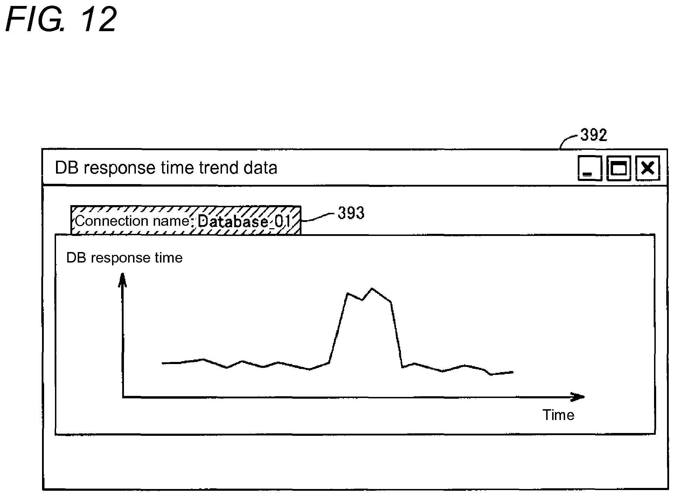

Figs. 11 and 12 are diagrams illustrating an example of a user interface provided in the support device 300 according to the embodiment. The support device 300 acquires the operation log 184 from the PLC 100 by, for example, the above-described process, and can display the acquired operation log 184 on the monitor of the support device 300.

Fig. 11 is a diagram illustrating an example of the user interface in the case of displaying the operation log 184 including the DB response time 184J in the support device 300.

As illustrated in Fig. 11, in a display screen 380, the operation log 184 including the DB response time 184J obtained by the support device 300 is displayed as a list. In entries (381, 382, 383, 384, and 385) of a response time log 388, various pieces of data included in the operation log 184 (illustrated in Fig. 6) is displayed.

The support device 300 displays, for example, an acquisition button 390 in the display screen 380. By accepting an input operation on the acquisition button 390 from the user, the operation log 184 including the DB response time 184J may be acquired from the PLC 100.

Fig. 12 is a diagram illustrating an example of displaying the DB response time 184J in the support device 300 in chronological order. As illustrated in Fig. 11, the DB response time 184J is recorded in association with time information. Consequently, for example, in DB response time trend data 392, the support device 300 may display the DB response time 184J in chronological order in a graph format using the DB response time 184J as the vertical axis and using time as the abscissa axis. In the example of Fig. 12, the connection name 184F is designated by the user. A connection name display tab 393 indicates the connection name designated by the user, and the DB response time 184J is displayed in chronological order.

In the example of Fig. 12, the DB response time 184J becomes long in a certain period but is relatively stable in the other time. Consequently, designers and the like can examine, for example, the possibility that a delay temporarily occurs in a communication in a communication path between the PLC 100 and the database device 400. In the case where the DB response time 184J gradually increases with lapse of time, the designers and the like can examine, for example, the possibility that a delay occurs in the process of the database device 400 and the processing performance of the database device 400 is enhanced.

By employing a configuration as described above, the user can know whether the user program 186 is executed properly or not and can easily specify the cause when a failure occurs during execution of the user program 186. Accordingly, debugging in a program and checking of soundness can be performed efficiently. For example, also in the case where inconvenience such as a delay occurs in the process of the control system including the PLC 100 and the database device 400, the cause can be easily analyzed.

In the foregoing embodiment, the example was described in which, for example, in the case where the PLC 100 receives a request to read the operation log 184 from the support device 300 by the system program 188 so that the support device 300 displays the operation log 184 on the monitor, the operation log 184 is read from a predetermined memory and sent as a response to the support device 300. Another method may be employed such that, for example, the CPU unit 104 has an FTP (File Transfer Protocol) server function, the CPU unit 104 is logged in by FTP client software, and the FTP client software obtains the operation log 184 by the FTP.

It is to be noted that the embodiments disclosed here are illustrative and not restrictive in all of aspects. The scope of the present invention is defined by the scope of claims rather than by the above description, and all changes that fall within the scope of claims are intended to be included.

## Claims

1. A programmable logic controller (100) for controlling a control object, wherein the programmable logic controller (100) comprises:
a CPU unit (104) and at least one input/output unit (106), wherein the CPU unit (104) comprises a processor (120) and a non-volatile memory (128);
a communication interface configured to be connected to a database system (400); wherein
the programmable logic controller (100) is configured by a system program (188) to:
- execute a user program (186) for controlling the control object; wherein the user program (186) is held in the non-volatile memory (128),
- at the time of executing the user program comprising an access instruction to access the database system (400), control an access to the database system (400) via the communication interface, and
- generate a statement according to the access instruction and transmit the generated statement to the database system (400);
**characterized in that**
the programmable logic controller (100) is configured by the system program (188) to store into a memory (126, 128) information indicative of time since transmission of the generated statement to the database system (400) until reception of a response from the database system (400),
wherein the user program (186) further comprises a status acquisition instruction for acquiring said information indicative of time and the programmable logic controller (100) is configured to send the information stored in the memory (126, 128) to the user program (186) in response to the status acquisition instruction.

2. The programmable logic controller (100) according to claim 1, wherein each time the generated statement to the database system (400) is
transmitted, the system program (188) starts measurement of, and stores into the memory (126, 128), the information indicative of time since transmission of the statement to the database system (400) until reception of a response from the database system (400).

3. The programmable logic controller (100) according to claim 1 or 2,
wherein the system program (188) is configured to record transmission time at which the generated statement is transmitted to the database system (400), record reception time at which a response from the database
system (400) to the statement is received, and acquire the information indicative of time on the basis of the transmission time and the reception time.

4. The programmable logic controller (100) according to anyone of claims 1 - 3, wherein:
the input/output unit (106) is configured to transmit and receive data, wherein
the system program (188) is configured to acquire the information indicative of time in association with date and time information each time the statement is transmitted to the database system (400), and
the input/output unit (106) is configured to transmit to an information processing apparatus connected to the controller the date and time information and the information indicative of time, in association with each other.

5. A system comprising:
an information processing apparatus, and a programmable logic controller (100) according to claim 1, wherein the information processing apparatus is connected to the programmable logic controller (100), wherein
the programmable logic controller (100) is connected to a database system (400), and
the information processing apparatus is configured to receive the information indicative of time stored in the memory by the programmable logic controller (100) from the programmable logic controller (100); and
the information processing apparatus is configured to display the received information indicative of time on a monitor (314).

6. The system according to claim 5, wherein each time the statement is transmitted to the database system (400), the system program (188) stores into the memory (126, 128) the information indicative of time, in association with date and time information,
the information processing apparatus is configured to receive from the programmable logic controller (100) the information indicative of time, and
the information processing apparatus is configured to display the received time information in association with the date and time information.

7. A system program (188) configured to control operation of a programmable logic controller (100) for controlling a control object, wherein
the programmable logic controller (100) comprises a communication interface configured to access a database system (400), a CPU unit (104), at least one input/output unit (106), a processor (120), and a memory (126, 128) including a non-volatile memory (128), wherein the CPU unit (104) comprises the processor (120) and the non-volatile memory (128), and
the program causes the processor to execute:
a step of executing a user
program (186) held in the non-volatile memory (128) to control the control object;
a step of, at the time of executing the user program (186) comprising an access instruction to access the database system (400), generating a statement according to the access instruction and transmitting the generated statement to the database system (400) via the communication interface;
a step of outputting the stored information to an information processing apparatus connected to the controller (100),
**characterized in that** the system program further causes the processor to execute:
a step of storing into the memory (126, 128) information indicative of time since transmission of the generated statement to the database system (400) until reception of a response from the database system (400), and
a step of sending the information stored in the memory (126, 128) to the user program (186) in response to a status acquisition instruction comprised in the user program to acquire said information indicative of time.

8. A method of controlling a programmable logic controller (100) controlling a control object, wherein the programmable logic controller (100) comprises:
a communication interface configured to be connected to a database system (400);
a CPU unit (104) and at least one input/output unit (106),
a processor (120); and
a memory (126, 128), including a non-volatile memory (128), wherein the CPU unit (104) comprises the processor (120) and the non-volatile memory (128),
wherein the method comprises that a system program (188) causes the processor (120) to
- execute a user program (186) to control the control object,
- at the time of executing an access instruction included in the user program (186) to access the database system (400), generate a statement according to the access instruction, and
- transmit the generated statement to the database system (400) via the communication interface, wherein the user program (186) is held in the non-volatile memory (128)
**characterized in that**
the system program (188) causes the processor (120) to store into the memory (126, 128) information indicative of time since transmission of the generated statement to the database system (400) until reception of a response from the database system (400), and to send the information stored in the memory (126, 128) to the user program (186) in response to a status acquisition instruction comprised in the user program (186) to acquire said information indicative of time.

## Patentansprüche

1. Programmierbarer Logikcontroller (100) zum Steuern eines Steuerungsobjekts, wobei der programmierbare Logikcontroller (100) aufweist:
eine CPU-Einheit (104) und zumindest eine Eingabe-/Ausgabeeinheit (106), wobei die CPU-Einheit (104) einen Prozessor (120) und einen nichtflüchtigen Speicher (128) aufweist;
ein Kommunikationsinterface, welches eingerichtet ist, mit einem Datenbanksystem (400) verbunden zu werden; wobei der programmierbare Logikcontroller (100) durch ein Systemprogramm (188) eingerichtet ist:
ein Benutzerprogramm (186) zum Steuern des Steuerungsobjekts auszuführen, wobei das Benutzerprogramm (186) in dem nichtflüchtigen Speicher (128) gehalten wird,
zu der Zeit des Ausführens des Benutzerprogramms, das eine Zugriffsinstruktion zum Zugreifen auf das Datenbanksystem (400) aufweist, einen Zugriff über das Kommunikationsinterface auf das Datenbanksystem (400) zu steuern, und
eine Anweisung gemäß der Zugriffsinstruktion zu erzeugen und die erzeugte Anweisung an das Datenbanksystem (400) zu übertragen;
**dadurch gekennzeichnet, dass**
der programmierbare Logikcontroller (100) durch das Systemprogramm (188) eingerichtet ist, Informationen in einem Speicher (126, 128) zu speichern, die eine Zeit seit der Übertragung der erzeugten Anweisung an das Datenbanksystem (400) bis zum Empfang einer Antwort von dem Datenbanksystem (400) angeben, wobei das Benutzerprogramm (186) ferner eine Statuserfassungsinstruktion zum Erfassen der die Zeit angebenden Informationen aufweist, und wobei der programmierbare Logikcontroller (100) eingerichtet ist, die in dem Speicher (126, 128) gespeicherten Informationen an das Benutzerprogramm (186) in Antwort auf die Statuserfassungsinstruktion zu senden.

2. Programmierbarer Logikcontroller (100) gemäß Anspruch 1, wobei jedes Mal, wenn die erzeugte Anweisung an das Datenbanksystem (400) übertragen wird, das Systemprogramm (188) eine Messung von den Informationen, die die Zeit seit der Übertragung der Anweisung an das Datenbanksystem (400) bis zum Empfangen der Antwort aus dem Datenbanksystem (400) angeben, startet und in den Speicher (126, 128) speichert.

3. Programmierbarer Logikcontroller (100) gemäß Anspruch 1 oder 2, wobei das Systemprogramm (188) eingerichtet ist, eine Transmissionszeit, bei welcher die erzeugte Anweisung an das Datenbanksystem (400) übertragen wird, aufzuzeichnen, eine Empfangszeit aufzuzeichnen, bei welcher eine Antwort aus dem Datenbanksystem (400) auf die Anweisung empfangen wird, und die die Zeit angebenden Informationen anhand der Transmissionszeit und der Empfangszeit zu erfassen.

4. Programmierbarer Logikcontroller (100) gemäß einem der Ansprüche 1 bis 3, wobei:
die Eingabe-/Ausgabeeinheit (106) eingerichtet ist, Daten zu senden und zu empfangen, wobei das Systemprogramm (188) eingerichtet ist, die die Zeit angebenden Informationen in Verbindung mit Datums- und Zeitinformationen jedes Mal zu erfassen, wenn die Anweisung an das Datenbanksystem (400) übertragen wird, und
die Eingabe-/Ausgabeeinheit (106) eingerichtet ist, an eine Informationsverarbeitungsvorrichtung, die mit dem Controller verbunden ist, die Datums- und Zeitinformationen und die die Zeit angebenden Informationen in Verbindung miteinander zu übertragen.

5. System, welches aufweist:
eine Informationsverarbeitungsvorrichtung und einen programmierbaren Logikcontroller (100) gemäß Anspruch 1, wobei die Informationsverarbeitungsvorrichtung mit dem programmierbaren Logikcontroller (100) verbunden ist, wobei
der programmierbare Logikcontroller (100) mit dem Datenbanksystem (400) verbunden ist und die Informationsverarbeitungsvorrichtung eingerichtet ist, die eine Zeit angebenden Informationen, die in dem Speicher des programmierbaren Logikcontrollers (100) gespeichert sind, von dem programmierbaren Logikcontroller (100) zu empfangen und
die Informationsverarbeitungsvorrichtung eingerichtet ist, die empfangenen, die Zeit angebenden Informationen auf einem Monitor (314) anzuzeigen.

6. System gemäß Anspruch 5, wobei jedes Mal, wenn die Anweisung an das Datenbanksystem (400) gesendet wird, das Systemprogramm (188) in dem Speicher (126, 128) die die Zeit angebenden Information in Verbindung mit Datums- und Zeitinformationen zu speichern, wobei die Informationsverarbeitungsvorrichtung eingerichtet ist, von dem programmierbaren Logikcontroller (100) die die Zeit angebenden Informationen zu empfangen, und wobei die Informationsverarbeitungsvorrichtung eingerichtet ist, die empfangene Zeitinformationen in Verbindung mit den Datums- und Zeitinformationen anzuzeigen.

7. Systemprogramm (188), welches eingerichtet ist, einen Steuerungsvorgang eines programmierbaren Logikcontrollers (100) zum Steuern eines Steuerungsobjekts zu steuern, wobei der programmierbare Logikcontroller (100) ein Kommunikationsinterface, das eingerichtet ist, auf ein Datenbanksystem (400) zuzugreifen, eine CPU-Einheit (104), zumindest eine Eingabe-/Ausgabeeinheit (106), einen Prozessor (120) und einen Speicher (126, 128) aufweist, der einen nichtflüchtigen Speicher (128) umfasst, wobei die CPU-Einheit (104) den Prozessor (120) und den nichtflüchtigen Speicher (128) aufweist und das Programm den Prozessor veranlasst, auszuführen:
einen Schritt eines Ausführens eines Benutzerprogramms (186), das in dem nichtflüchtigen Speicher (128) gehalten wird, um das Steuerungsobjekt zu steuern;
wenn das Benutzerprogramm (186), das eine Zugriffsinstruktion zum Zugreifen auf das Datenbanksystem (400) aufweist, ausgeführt wird, einen Schritt eines Erzeugens einer Anweisung gemäß der Zugriffsinstruktion und eines Übertragens der erzeugten Anweisung an das Datenbanksystem (400) über das Kommunikationsinterface;
einen Schritt des Ausgebens der gespeicherten Information an eine Informationsverarbeitungsvorrichtung, die mit dem Controller (100) verbunden ist,
**dadurch gekennzeichnet, dass**
das Systemprogramm ferner den Prozessor veranlasst, auszuführen:
einen Schritt eines Speicherns von Informationen, die eine Zeit seit dem Übertragen der erzeugten Anweisung an das Datenbanksystem (400) bis zum Empfangen einer Antwort von dem Datenbanksystem (400) angeben, in den Speicher (126, 128), und
einen Schritt eines Sendens der in dem Speicher (126, 128) gespeicherten Informationen an das Benutzerprogramm (186) in Antwort auf eine Statuserfassungsinstruktion, die in dem Benutzerprogramm enthalten ist, um die die Zeit angebenden Informationen zu erfassen.

8. Verfahren zum Steuern eines programmierbaren Logikcontrollers (100), der ein Steuerungsobjekt steuert, wobei der programmierbare Logikcontroller (100) aufweist:
ein Kommunikationsinterface, das eingerichtet ist mit einem Datenbanksystem (400) verbunden zu werden;
eine CPU-Einheit (104) und zumindest eine Eingabe-/Ausgabeeinheit (106),
einen Prozessor (120); und
einen Speicher (126, 128), welcher einen nichtflüchtigen Speicher (128) umfasst, wobei die CPU-Einheit (104) den Prozessor und den nichtflüchtigen Speicher (128) aufweist,
wobei das Verfahren aufweist, dass ein Systemprogramm (188) den Prozessor (120) veranlasst,
ein Benutzerprogramm (186) zum Steuern des Steuerungsobjekts auszuführen,
wenn eine Zugriffsinstruktion, die in dem Benutzerprogramm (186) umfasst ist, zum Zugreifen auf das Datenbanksystem (400) ausgeführt wird, eine Anweisung gemäß der Zugriffsinstruktion zu erzeugen, und
die erzeugte Anweisung an das Datenbanksystem (400) über das Kommunikationsinterface zu senden, wobei das Benutzerprogramm (186) in dem nichtflüchtigen Speicher (128) gehalten wird,
**dadurch gekennzeichnet, dass**
das Systemprogramm (188) den Prozessor (120) veranlasst, in dem Speicher (126, 128) Informationen zu speichern, die eine Zeit seit der Übertragung der erzeugten Anweisung an das Datenbanksystem (400) bis zum Empfang einer Antwort von dem Datenbanksystem (400) angeben, und die in dem Speicher (126, 128) gespeicherten Information an das Benutzerprogramm (186) in Antwort auf eine Statuserfassungsinstruktion zu senden, die in dem Benutzerprogramm (186) enthalten ist, um die die Zeit angebenden Informationen zu erfassen.

## Revendications

1. Automate programmable industriel (100) destiné à commander un objet de contrôle, dans lequel l'automate programmable industriel (100) comprend :
une unité CPU (104) et au moins une unité d'entrée/sortie (106), dans lequel l'unité CPU (104) comprend un processeur (120) et une mémoire non volatile (128) ;
une interface de communication configurée pour être connectée à un système de base de données (400) ;
dans lequel l'automate programmable industriel (100) est configuré par un programme système (188) pour :
- exécuter un programme d'utilisateur (186) destiné à commander l'objet de contrôle ; dans lequel le programme d'utilisateur (186) est contenu dans la mémoire non volatile (128),
- au moment d'exécuter le programme d'utilisateur comprenant une instruction d'accès pour accéder au système de base de données (400), commander un accès au système de base de données (400) par le biais de l'interface de communication, et
- créer un énoncé en fonction de l'instruction d'accès et transmettre l'énoncé créé au système de base de données (400) ;
**caractérisé en ce que** :
l'automate programmable industriel (100) est configuré par le programme système (188) pour stocker dans une mémoire (126, 128) des informations indiquant un temps écoulé depuis la transmission de l'énoncé créé au système de base de données (400), jusqu'à la réception d'une réponse en provenance du système de base de données (400),
dans lequel le programme d'utilisateur (186) comprend en outre une instruction d'acquisition d'état, destinée à acquérir lesdites informations indiquant un temps, et
l'automate programmable industriel (100) est configuré pour envoyer les informations stockées dans la mémoire (126, 128) au programme d'utilisateur (186) en réponse à l'instruction d'acquisition d'état.

2. Automate programmable industriel (100) selon la revendication 1, dans lequel à chaque fois que l'énoncé créé est transmis au système de base de données (400), le programme système (188) se met à mesurer et stocke dans la mémoire (126, 128), les informations indiquant un temps écoulé depuis la transmission de l'énoncé au système de base de données (400), jusqu'à la réception d'une réponse en provenance du système de base de données (400).

3. Automate programmable industriel (100) selon la revendication 1 ou 2, dans lequel le programme système (188) est configuré pour enregistrer l'heure de transmission à laquelle l'énoncé créé est transmis au système de base de données (400), enregistrer l'heure de réception à laquelle une réponse en provenance du système de base de données (400) à l'énoncé est reçue, et acquérir les informations indiquant un temps sur la base de l'heure de transmission et de l'heure de réception.

4. Automate programmable industriel (100) selon l'une quelconque des revendications 1 à 3, dans lequel :
l'unité d'entrée/sortie (106) est configurée pour transmettre et recevoir des données, dans lequel le programme système (188) est configuré pour acquérir les informations indiquant un temps en association avec des informations de date et d'heure, à chaque fois que l'énoncé est transmis au système de base de données (400), et
l'unité d'entrée/sortie (106) est configurée pour transmettre à un appareil de traitement d'informations connecté à l'automate programmable les informations de date et d'heure et les informations indiquant un temps, en association les unes avec les autres.

5. Système comprenant :
un appareil de traitement d'informations, et un automate programmable industriel (100) selon la revendication 1, dans lequel l'appareil de traitement d'informations est connecté à l'automate programmable industriel (100), dans lequel :
l'automate programmable industriel (100) est connecté à un système de base de données (400), et
l'appareil de traitement d'informations est configuré pour recevoir les informations indiquant un temps, stockées dans la mémoire par l'automate programmable industriel (100), en provenance de l'automate programmable industriel (100) ; et
l'appareil de traitement d'informations est configuré pour afficher les informations reçues indiquant un temps, sur un moniteur (314).

6. Système selon la revendication 5, dans lequel à chaque fois que l'énoncé est transmis au système de base de données (400), le programme système (188) stocke dans la mémoire (126, 128) les informations indiquant un temps, en association avec des informations de date et d'heure,
l'appareil de traitement d'informations est configuré pour recevoir en provenance de l'automate programmable industriel (100) les informations indiquant un temps, et l'appareil de traitement d'informations est configuré pour afficher les informations de temps reçues, en association avec les informations de date et d'heure.

7. Programme système (188) configuré pour régir le fonctionnement d'un automate programmable industriel (100) destiné à commander un objet de contrôle, dans lequel :
l'automate programmable industriel (100) comprend une interface de communication configurée pour accéder à un système de base de données (400), une unité CPU (104), au moins une unité d'entrée/sortie (106), un processeur (120), et une mémoire (126, 128) incluant une mémoire non volatile (128), dans lequel l'unité CPU (104) comprend le processeur (120) et la mémoire non volatile (128), et le programme fait exécuter au processeur :
une étape consistant à exécuter un programme d'utilisateur (186) contenu dans la mémoire non volatile (128) pour commander l'objet de contrôle ;
une étape consistant, au moment d'exécuter le programme d'utilisateur (186) comprenant une instruction d'accès pour accéder au système de base de données (400), à créer un énoncé en fonction de l'instruction d'accès et à transmettre l'énoncé créé au système de base de données (400) par le biais de l'interface de communication ;
une étape consistant à délivrer les informations stockées à un appareil de traitement d'informations connecté à l'automate programmable (100),
**caractérisé en ce que** :
le programme système fait en outre exécuter au processeur :
une étape consistant à stocker dans la mémoire (126, 128) des informations indiquant un temps écoulé depuis la transmission de l'énoncé créé au système de base de données (400), jusqu'à la réception d'une réponse en provenance du système de base de données (400), et
une étape consistant à envoyer les informations stockées dans la mémoire (126, 128) au programme d'utilisateur (186), en réponse à une instruction d'acquisition d'état comprise dans le programme d'utilisateur pour acquérir lesdites informations d'état indiquant un temps.

8. Procédé de commande d'un automate programmable industriel (100) commandant un objet de contrôle, dans lequel l'automate programmable industriel (100) comprend :
une interface de communication configurée pour être connectée à un système de base de données (400) ;
une unité CPU (104) et au moins une unité d'entrée/sortie (106) ;
un processeur (120) ; et
un processeur (126, 128) incluant une mémoire non volatile (128), dans lequel l'unité CPU (104) comprend le processeur (120) et la mémoire non volatile (128),
dans lequel le procédé comprend le fait qu'un programme système (188) fasse que le processeur (120) :
- exécute un programme d'utilisateur (186) pour commander l'objet de contrôle,
- au moment de l'exécution d'une instruction d'accès incluse dans le programme d'utilisateur (186) pour accéder au système de base de données (400), crée un énoncé en fonction de l'instruction d'accès, et
- transmette l'énoncé créé au système de base de données (400) par le biais de l'interface de communication, dans lequel le programme d'utilisateur (186) est contenu dans la mémoire non volatile (128),
**caractérisé en ce que** :
le programme système (188) fait que le processeur (120) stocke dans la mémoire (126, 128) des informations indiquant un temps écoulé depuis la transmission de l'énoncé créé au système de base de données (400), jusqu'à la réception d'une réponse en provenance du système de base de données (400), et envoie les informations stockées dans la mémoire (126, 128) au programme d'utilisateur (186), en réponse à une instruction d'acquisition d'état comprise dans le programme d'utilisateur (186) pour acquérir lesdites informations d'état indiquant un temps.
